# EUROPEAN PATENT SPECIFICATION

(11) **EP 3 190 690 B1**
(45) Date of publication and mention of the grant of the patent: **12.05.2021**
(21) Application number: 14901313.8
(22) Date of filing: 03.09.2014
(51) Int. Cl.: H02K 13/10, H02K 15/02

(54) **RING VARISTOR-BASED METHOD FOR REDUCING ELECTROMAGNETIC INTERFERENCE OF MOTOR**
AUF RINGVARISTOR BASIERENDES VERFAHREN ZUR REDUZIERUNG ELEKTROMAGNETISCHER INTERFERENZEN EINES MOTORS
PROCÉDÉ UTILISANT UNE VARISTANCE EN ANNEAU POUR RÉDUIRE LES INTERFÉRENCES ÉLECTROMAGNÉTIQUES D'UN MOTEUR

(43) Date of publication of application: 12.07.2017
(73) Proprietor: Guangdong Zhaoqing L & V Co. Ltd, Zhaoqing, Guangdong 526238 (CN)
(72) Inventor: FENG, Chen, Zhaoqing Guangdong 526238 (CN); LI, Yaoping, Zhaoqing Guangdong 526238 (CN)
(74) Representative: Banzer, Hans-Jörg
(86) International application number: PCT/CN2014/085824
(87) International publication number: WO 2016/033753

(56) References cited:
- WO-A1-2008/102524
- CN-U- 201 639 422
- CN-U- 202 503 418
- JP-A- 2004 040 855
- JP-A- 2006 271 103
- JP-A- 2007 300 705
- JP-A- 2008 206 346
- JP-A- 2008 206 347
- US-A1- 2008 143 212
- US-B1- 6 285 106

## Description

The present invention relates to a motor commutator, and particularly to a ring varistor-based method for reducing electromagnetic interference of a motor, a corresponding motor commutator and the motor.

### BACKGROUND TECHNOLOGY

It is well known that ring varistors are used to absorb electromagnetic interference generated by sudden switch-on and switch-off between a commutator and a brush of a motor.

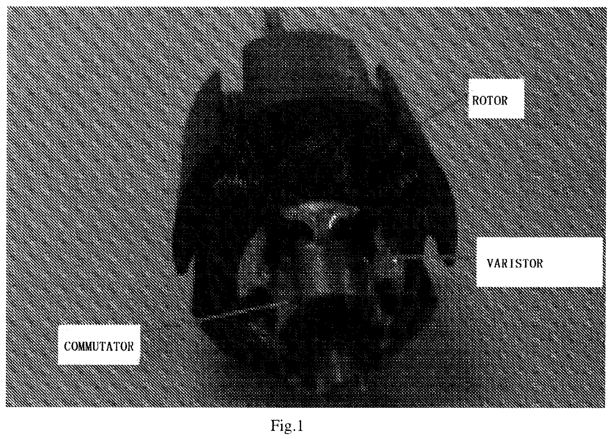

Fig. 1 illustrates a manner of installing a ring varistor to a commutator in the prior art. As shown, the varistor is tin-soldered to a lug of the commutator.

For a motor with a large size, the ring varistor has to be made with a large size when tin-soldered to the lug of a commutator due to the large size of the commutator. The large size of the ring varistor results in disadvantages as follows:
1. with a large ring, the varistor occupies more space of a motor end cover and interferes with components of the motor end cover.
2. with a large ring, the varistor is easily damaged, and higher control requirements are imposed on the varistor production and tin-soldering installation process, which increases control cost.
3. with a large size of the ring varistor, more material is used and the cost is high.

Therefore, there is a need for an improved solution of installing a ring varistor to a commutator in the art.

A ring varistor-based method according to the preamble of claim 1 is known from JP 2007-300705 A.

US,285,106 B1 also proposes a ring varistor-based method according to the preamble of claim 1, in which an annular groove is formed at an end of the motor commutator, and a short-circuit conductor is provided in the annular groove. The short-circuit conductor may comprise an electrically conductive elastic plate to provide an electrical connection between a connecting electrode of the ring varistor and a corresponding commutator segment of the motor commutator.

### SUMMARY OF THE INVENTION

According to the invention, a ring varistor-based method for reducing electromagnetic interference of a motor as defined in claim 1, a motor commutator as defined in claim 2, and a motor as defined in claim 3 are provided.

### DESCRIPTION OF DRAWINGS

Fig. 1 illustrates a manner of installing a ring varistor to a commutator in the prior art;
Fig. 2 illustrates a manner of installing a ring varistor to a commutator according to an example which does not form part of the invention;
Fig. 3 illustrates a manner of installing a ring varistor to a commutator according to an implementation of the present invention.

### DETAILED DESCRIPTION OF THE INVENTION

Embodiments of the present invention are described below with reference to the drawings. Numerous specific details are set forth in the following description such that those skilled in the art will understand and implement the present invention more comprehensively. However, it is obvious for those skilled in the art that the present invention can be implemented without some of these specific details. Furthermore, it will be understood that the present invention is not limited to the described particular embodiments. Rather, it is considered that any combination of the following features and elements can be used to implement the present invention, regardless of whether they relate to different embodiments. Therefore, the following aspects, features, embodiments and advantages are only illustrative and cannot be interpreted as elements or limitation of the claims, unless it is explicitly stated in the claims.

In the present invention, instead of the traditional design in which a varistor is soldered onto a commutator lug, the ring varistor is installed in a counterbore in the bottom end of the commutator such that there is no need to increase the size of the varistor and no size limitation to interior space of the end cover of the motor while the EMC level is improved.

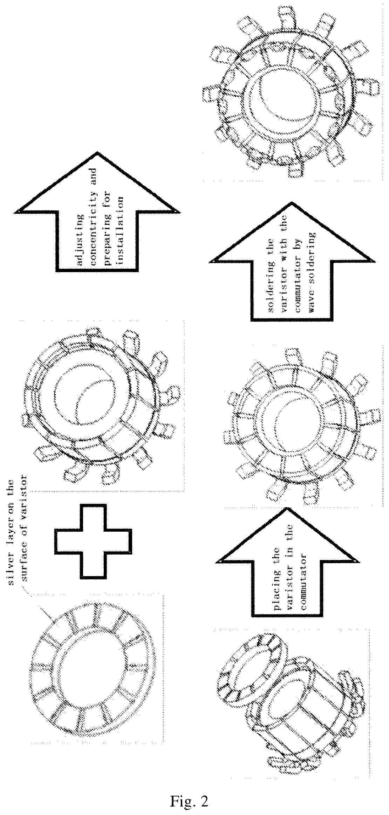

In an example not forming part of the invention, a counterbore is formed in an end of a motor commutator, a varistor is placed into the counterbore and tin-soldered (e.g. wave-soldered) to a commutator segment. Fig. 2 illustrates a schematic view of this example.

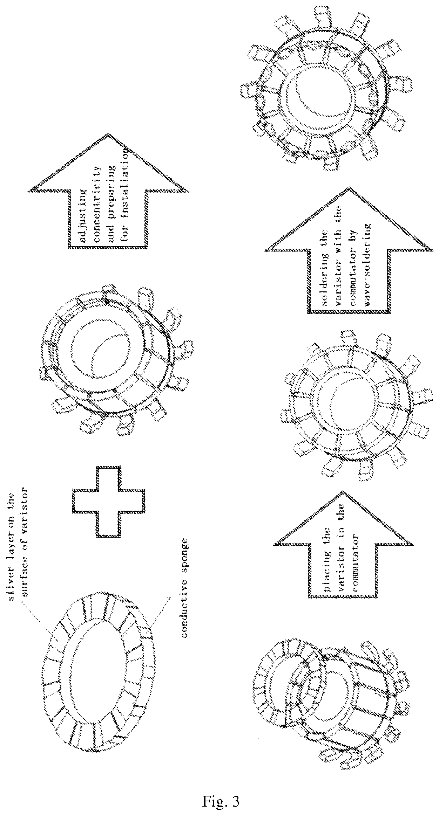

In an implementation of the invention, a layer of conductive sponge is adhered to a silver layer of the varistor and the varistor adhered with conductive sponge is placed into the counterbore such that the conductive sponge contacts with a commutator segment, and the varistor is also tin-soldered to the commutator segment. Fig. 3 illustrates a schematic view of this implementation.

As can be understood by those skilled in the art, the present invention actually provides a ring varistor-based method for reducing electromagnetic interference of a motor, a motor commutator and a motor.

In an aspect of the invention, a ring varistor-based method for reducing electromagnetic interference of a motor is provided, the method comprising the following steps: forming a counterbore in an end of a motor commutator; and placing a ring varistor into the counterbore.

According to embodiments of the present invention, the method further comprises: adhering a layer of conductive sponge to a silver layer of the ring varistor before the ring varistor is placed into the counterbore, contacting the conductive sponge with the commutator segment when the ring varistor adhered with the conductive sponge is placed into the counterbore, and tin-soldering the ring varistor placed in the counterbore to the commutator segment.

In another aspect of the present invention, a motor commutator is provided, wherein a counterbore is formed in an end of the motor commutator and a ring varistor is placed in the counterbore. A layer of conductive sponge is adhered to a silver layer of the ring varistor and the conductive sponge contacts with a commutator segment. The ring varistor placed in the counterbore is tin-soldered to the commutator segment.

In yet another aspect of the present invention, a motor which comprises the motor commutator of any of the above embodiments according to the invention, is provided. The advantages of the embodiments of the present invention comprise at least one of the following:
1. Space is saved and soldering is convenient because the varistor is installed into the counterbore in the commutator end.
2. There is no need to increase the size of varistors, thus saving materials (varistor material and tin-soldering) and cost.
3. As the size barely changes, the requirements on production control of varistors remain substantially the same and the cost of production control will not be increased.
4. When the varistor is placed at the position of the counterbore, the strength of the varistor is higher than it is soldered to a commutator hook since the varistor can be made thicker due to small size.
5. Electromagnetic radiation generated by coil commutation voltage or pulse voltage can be effectively reduced and the EMC level is improved.

While various embodiments of the present invention are described with reference to the drawings, it can be understood by those skilled in the art that the above description is only illustrative, and is not intended to limit the present invention. A variety of modifications and variants can be made to the embodiments of the present invention without departing from the scope of the present invention, which is defined by the appended claims.

## Claims

1. A ring varistor-based method for reducing electromagnetic interference of a motor, comprising:
forming a counterbore in an end of a motor commutator; and
placing a ring varistor into the counterbore,
**characterized by**
adhering a layer of conductive sponge to a silver layer of the ring varistor before the ring varistor is placed into the counterbore,
contacting the conductive sponge with a commutator segment when the ring varistor adhered with the conductive sponge is placed into the counterbore, and
tin-soldering the ring varistor placed in the counterbore to the commutator segment.

2. A motor commutator,
wherein a counterbore is formed in an end of the motor commutator and a ring varistor is placed in the counterbore,
**characterized in that**
a layer of conductive sponge is adhered to a silver layer of the ring varistor and the conductive sponge contacts with a commutator segment, and
the ring varistor is tin-soldered to the commutator segment.

3. A motor, comprising the motor commutator of claim 2.

## Patentansprüche

1. Ringvaristor-basiertes Verfahren zur Verringerung einer elektromagnetischen Störung eines Motors, umfassend:
Ausbilden einer Senkbohrung in einem Ende eines Motorkommutators; und
Platzieren eines Ringvaristors in der Senkbohrung,
**gekennzeichnet durch**
Kleben einer Schicht aus leitfähigem Schwamm auf eine Silberschicht des Ringvaristors, bevor der Ringvaristor in die Senkbohrung platziert wird,
Kontaktieren des leitfähigen Schwamms mit einem Kommutatorsegment, wenn der mit dem leitfähigen Schwamm verklebte Ringvaristor in die Senkbohrung eingesetzt wird, und
Löten des in der Senkung platzierten Ringvaristors an das Kommutatorsegment mit Zinn.

2. Motorkommutator,
wobei eine Senkbohrung in einem Ende des Motorkommutators ausgebildet ist und ein Ringvaristor in der Senkbohrung platziert ist,
**dadurch gekennzeichnet, dass**
eine Schicht aus leitfähigem Schwamm an einer Silberschicht des Ringvaristors geklebt ist und der leitfähige Schwamm mit einem Kommutatorsegment in Kontakt steht, und
der Ringvaristor mit dem Kommutatorsegment mit Zinn verlötet ist.

3. Motor, umfassend den Motorkommutator nach Anspruch 2.

## Revendications

1. Procédé utilisant une varistance en anneau pour réduire les interférences électromagnétiques d'un moteur, comprenant les étapes consistant à :
former un contre-alésage dans une extrémité d'un collecteur de moteur ; et
placer une varistance en anneau dans le contre-alésage,
**caractérisé par** le fait de
faire adhérer une couche d'éponge conductrice à une couche d'argent de la varistance en anneau avant que la varistance en anneau ne soit placée dans le contre-alésage,
mettre en contact l'éponge conductrice avec un segment de collecteur lorsque la varistance en anneau adhérée à l'éponge conductrice est placée dans le contre-alésage, et
soudre à l'étain la varistance en anneau placée dans le contre-alésage du segment de collecteur.

2. Collecteur de moteur,
dans lequel un contre-alésage est formé dans une extrémité du collecteur de moteur et une varistance en anneau est placée dans le contre-alésage,
**caractérisé en ce que**
une couche d'éponge conductrice est adhérée à une couche d'argent de la varistance en anneau et l'éponge conductrice entre en contact avec un segment de collecteur, et
la varistance en anneau est soudée à l'étain sur le segment de collecteur.

3. Moteur, comprenant le collecteur de moteur de la revendication 2.
